Europäisches Patentamt

European Patent Office

Office européen des brevets

(11) Publication number: **0 310 395**
A1

# EUROPEAN PATENT APPLICATION

(21) Application number: **88309053.2**

(22) Date of filing: **29.09.88**

(51) Int. Cl.⁴: **B 65 G 17/12**
**B 65 G 25/10**
**// B65G23/42**

(30) Priority: **02.10.87 CA 548505**

(43) Date of publication of application:
**05.04.89 Bulletin 89/14**

(84) Designated Contracting States:
**BE DE FR GB IT NL SE**

(71) Applicant: **C-I-L Inc.**
**90 Sheppard Avenue East**
**North York Ontario M2N 6H2 (CA)**

(72) Inventor: **Manning, William**
**6049 Sprott Street**
**Burnaby British Columbia (CA)**

(74) Representative: **Gore, Peter Manson et al**
**W.P. THOMPSON & CO. Coopers Building Church Street**
**Liverpool L1 3AB (GB)**

(54) **Continuous bucket conveyor system.**

(57) An endless closed-loop continuous bucket conveyor/elevator assembly not requiring internal lubrication which comprises
one or more endless, free-running, guided flexible cables (5) for carrying buckets (6) pivotally attached at equidistantly spaced intervals therealong, the endless cables defining a first substantially horizontal bucket-charging section (2), a substantially vertical bucket-elevating section (3) and a second substantially horizontal bucket-discharging section (4), and driving means (10,11,12,13) for continuously advancing the cables and attached buckets, the driving means being mounted adjacent the cables and being adapted to engage the cables to urge the cables and buckets in a forward direction.

FIG. 1

EP 0 310 395 A1

**Description**

# CONTINUOUS BUCKET CONVEYOR SYSTEM

The present invention relates to bucket conveyor/ elevator systems of the type having a series of bucket containers mounted upon an endless conveying means for the movement of bulk material.

Bucket conveyor systems for conveying loose or bulk material from a loading station to an unloading station are commonly known. Normally, these systems are employed when the material is to be elevated from a lower location to a higher location although such elevation may be combined with a lateral or a substantially horizontal movement. Typical bucket elevator or conveyor systems are disclosed, for example, in US- A- 4 184 584; US- A- 4 232 782; and US- A- 4 493 413.

Generally, continuous bucket conveyor systems comprise an endless belt or chain or parallel chains which are attached a series of spaced buckets. The chains are passed around upper and lower chain wheels, one or both of which is a drive or power wheel. There may also be intermediate idler wheels to help support the chains and buckets or to provide a change in direction. Loose bulk material is loaded into the buckets at one location and discharged or tipped from the buckets at a second location. Normally, the buckets are adapted for automatic tipping and the carrier chain is powered to one or more positions to move in a unitary direction by a power source such as a sprocketed or geared drive motor.

Bucket conveyor systems employed in moving bulk or loose material frequently operate in harsh environments. The conveyance of sand, rock and the like causes heavy abrasion of moving parts while the conveyance of salt, chemicals and the like contributes the corrosion of metal components. As a result, excessive wear often takes place wherever there is contact between moving parts and, in particular, at the chain links and at the points of engagement of the chain and the drive sprockets. Suitable lubrication of the moving parts remains a continuing problem and, frequently, shutdown of the system is required because of excessive maintenance demands.

The present invention provides a bucket conveyor/elevator system which substantially reduces the problems of operation and maintenance in corrosive and abrasive environments. It has now been found possible to provide a continuous conveyance system for the supply of loose bulk material, horizontally, vertically or inclined, from a loading station to an unloading station. It has also been found possible to provide a conveyance system having no internal lubrication requirements, the only lubrication required being external bearings which may be sealed. Further, it has been found possible to provide an endless conveyance system wherein the drive means is external to the system. Still further, it has been found possible to provide a bucket conveyance system wherein spillage of bulk material at the bucket loading location is minimized.

According to the present invention there is provided an endless, closed-loop bucket conveyor/ elevator assembly which comprises:

one or more endless, free-running, guided, flexible cables, for example, wire rope, synthetic fibre rope or natural fibre rope cables, for carrying buckets attached equidistantly spaced intervals therealong, the endless cables defining a first substantially horizontal bucket-charging section, a substantially vertical bucket-elevating section and a second substantially horizontal bucket-discharging section, and a driving means, for example, a hydraulic, pneumatic or mechanical driving means, for continuously advancing the cables and attached buckets, the driving means being mounted adjacent the cables and attached buckets and being adapted to engage the cables to urge the cables and buckets in a forward direction.

The driving means may comprise at least two fluid operated cylinder and piston combinations adapted for reciprocal operation to successively engage the cables and buckets. The cylinder and piston combinations may be operated hydraulically or pneumatically. The driving means may be adapted to engage one or more contact members attached to the cables.

The conveyor assembly also provides means whereby spillage at the horizontal charging section is directed towards empty buckets on the closed path cable loop. More particularly there may be means to continuously collect spillage at the bucket charging section and direct the spillage into adjacent, empty buckets. The spillage collection means may comprise a receiving chute mounted beneath the bucket charging section.

The endless cables which comprise the closed path loop of the conveyor of the invention replace the normally employed conveyor chains or links with a consequent reduction in the need to provide lubrication thereto. The separate driving means of the invention preferably comprises one or more reciprocating, pressure operated pushed elements which eliminates the use of drive sprockets, chains, belts and the like resulting in substantially reduced maintenance costs. The use of a flexible cable also allows the elevator to turn 90° horizontal as many times as required, which is not possible with a belt or chain elevator.

The particular features of the invention will become apparent from the following detailed description as illustrated in the accompanying drawings. The drawings are mainly conceptual in form and are intended to illustrate the principles of the invention rather than structural details which details will be obvious to one skilled in the mechanical arts.

Figure 1 is a side elevational view showing conceptually the mechanisms of the bucket conveyor of the invention; and

Figure 2 is a section view taken along the line 2-2 of Figure 1.

Figure 3 is a side elevational conceptual view of the operating cylinders showing a means to provide reciprocating action between the cylinders.

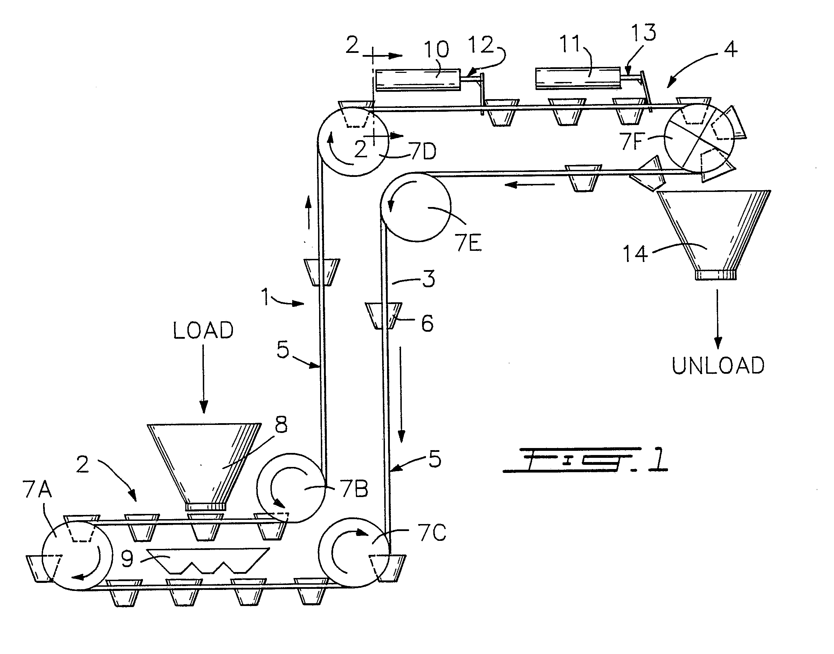

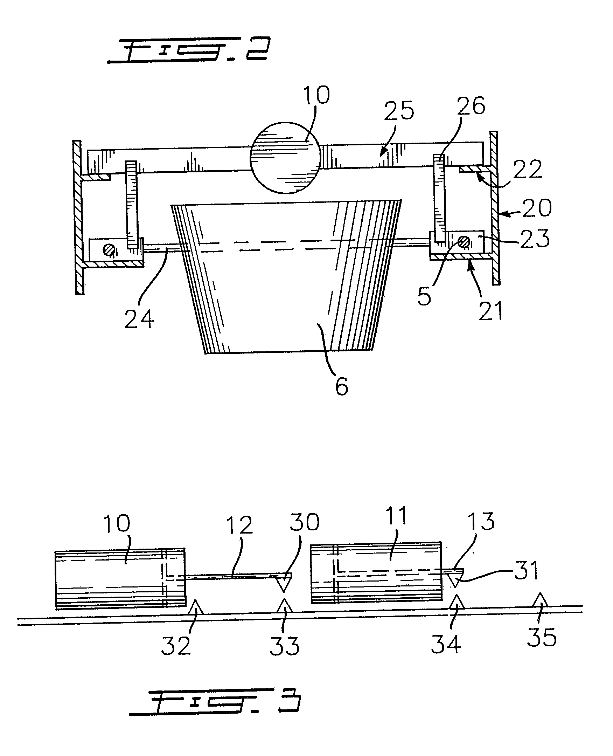

Referring to the Figures of the drawings, Figure 1 shows a bucket conveyor/elevator assembly 1, mounted upon a framework (not shown except in part in Figure 2) having a lower horizontal charging section 2, a vertical section 3 and an upper horizontal discharging section 4. The conveyor shown comprises two endless parallel cables 5 (only one of which is shown) of, for example, wire, synthetic or natural strands, to which are pivotally attached a series of buckets 6. The endless cables 5 are passed partly around freely rotating guide wheels 7A, 7B, 7C, 7D, 7E and 7F. Guide wheel 7F at the end of upper horizontal section 4 is adapted to invert or tip the buckets 6 as they pass therearound. A bulk material loading hopper is shown at 8 and a spill collection hopper is at 9. The free-running cables 5 and attached buckets 6 are urged in the direction of the arrows by means of hydraulic or pneumatic cylinders and pistons 10 and 11. An unloading hopper or chute is shown at 14.

Figure 2 shows in greater detail the mounting of bucket 6 and cylinder 10. Parallel metal vertical framework 20 have mounted thereon tracks 21 and 22. Tracks 21 support free sliding blocks 23 to which the cables 5 are firmly affixed. Between blocks 23 is a support rod 24 to which bucket 6 is pivotally attached. Fixedly mounted above bucket 6 (by means not shown) and separate therefrom is cylinder 10. Attached to the forward end of piston rod 12 (Figure 1) is pusher bar 25 which slides freely along track 22. Suspended from pusher bar 25 are pusher fingers 26. Pusher fingers 26 are adapted to engage sliding blocks 23 and to urge blocks 23 and attached bucket 6 along track 21, when cylinder 10 is energized. On the return stroke of piston rod 12, fingers 26 are adapted to rise over and clear sliding blocks 23. Cylinder 10 and cylinder 11 operate reciprocally to provide a continuous forward motion to the cables 5 and attached buckets 6.

While the forward motion of the conveyor has been described in terms of the preferred pusher cylinders 10 and 11, this is not to say that alternative drive mechanisms may not also be employed so long as the means used is substantially maintenance free. The use, for example, of a motor and attached space gear wheel may be employed whereby the blocks 23 may be engaged and advanced as the gear wheel is rotated. Other arrangements will occur to those skilled in the art.

The operation of the bucket conveyor system of the invention can be described with reference to the drawing. A pneumatic or hydraulic force is applied reciprocally to cylinders 10 and 11. As cylinder 10 is energized, piston rod 12 and associated pusher bar 25 and fingers 26 engage sliding blocks 23 and attached endless cables 5 urging the whole forward a distance equivalent to the piston stroke. Simultaneously, a reverse stroke is applied to cylinder 11 placing its rod 13 and associated pusher bar 25 and pusher fingers 26 in position to act in a forward direction at the instant the forward stroke of piston rod 12 is completed. Thus, the reciprocating action of cylinders 10 and 11 and piston rods 12 and 13 provide a substantially smooth and continuous forward motion to cables 5 and attached buckets 6.

With reference to Figure 3, the two operating cylinders 10 and 11 and their associated piston rods 12 and 13 are shown. Piston rod 12 is shown in the extended position and rod 13 is fully retracted. At the end of rod 12 is a contact 30 and at the end of rod 13 is contact 31. Adjacent to contact 30 are position switches 32 and 33 and adjacent to contact 31 are position switches 34 and 35. The contact switches provide a means to operate control valves (not shown) in the lines (not shown) which deliver operating fluid to cylinders 10 and 11. At the start of operations, the cylinders are set in the positions indicated in Figure 3 with contact 30 engaging switch 33 and contact 31 engaging switch 34. The switches 32, 33, 34 and 35 are so linked that switches 32 and 34 and switches 33 and 35 must be simultaneously engaged to permit the cylinders to advance or retract in series. As cylinder 11 is advanced, cylinder 10 retracts. Since the cylinders are identical in volume and the flow of operating fluid to the cylinders is equalized, contact 30 engages switch 32, when cylinder 10 retracts, before contact 31 impinges on switch 35 as cylinder 11 advances. The volume of operating fluid displaced in cylinder 10, because of the volume occupied by the internal piston rod 12, is slightly less than the volume of fluid displaced in cylinder 11. Cylinder 11 cannot advance until contact 31 engages switch 34 and contact 30 engages switch 32. Thus the reciprocating movement of the cylinders continues until the flow of operating fluid is interrupted.

When continuous forward movement of cables 5 has been achieved, bulk material is loaded into buckets 6 at loading hopper 8. An upper level location is provided for buckets 6 during loading so that any spillage of material can be collected and directed towards a second lower level of buckets 6 immediately below the loading position. A collection hopper 9 traps any spillage or overflow of material and channels same towards the second lower tier of buckets as shown. The endless cables 5 are passed around guide wheels 7, which are shown in minimum number. Further guide wheels can be provided an necessary to give adequate support to the assembly. After filling, the buckets 6 are moved along the lower horizontal section 2 and then rise up the vertical section 3 and, thence, along the upper horizontal section 4. At the end of the upper horizontal section 4, the buckets 6 are inverted or tipped and the contents are discharged out. After tipping, the buckets 6 resume their upright position. The tipping of buckets 6 can be achieved by one of several means known in the art.

By virtue of the endless cable construction of the conveyor of the invention and the absence of any drive motor and associated gears, chains and sprockets, lubrication requirements are reduced to a minimum. Since all guide wheels act as idler pulleys, the problems of high abrasion normally encountered in driven wheels is greatly reduced. Furthermore, the interchangeability of parts is simplified since no matching components, for example, chain and sprocket, are employed. Parts inventory is likewise simplified. Ease of access for lubrication and maintenance is provided.

The material of construction of the components may be carbon steel, abrasive resistant steel, stainless steel, plastic or any other material compatible to the material conveyed. In some instances, it may be desirable to construct the buckets 6 of a hard rubber or plastic to reduce the total weight to be moved by the pusher pistons 10 and 11.

## Claims

1. An endless closed-loop continuous bucket conveyor/elevator assembly not requiring internal lubrication which comprises:
one or more endless, free-running, guided flexible cables for carrying buckets pivotally attached at equidistantly spaced intervals therealong, the endless cables defining a first substantially horizontal bucket-charging section, a substantially vertical bucket-elevating section and a second substantially horizontal bucket-discharging section, and
driving means for continuously advancing the cables and attached buckets, the driving means being mounted adjacent the cables and being adapted to engage the cables to urge the cables and buckets in a forward direction.

2. A conveyor/elevator assembly according to claim 1, wherein the driving means comprises at least two fluid operated cylinder and piston combinations adapted for reciprocal operation to successively engage the cables.

3. A conveyor/elevator assembly according to claim 2, wherein the cylinder and piston combinations are operated hydraulically or pneumatically.

4. A conveyor/elevator assembly according to any of claims 1 to 3, wherein the driving means is adapted to engage one or more contact members attached to the cables.

5. A conveyor/elevator assembly according to any of claims 1 to 4, also comprising means to continuously collect spillage at the bucket charging section and direct the spillage into adjacent, empty buckets.

6. A conveyor/elevator assembly according to claim 5, wherein the spillage collection means comprises a receiving chute mounted beneath the bucket charging section.

7. A conveyor/elevator assembly according to any of claims 1 to 6, wherein the said flexible cables comprise wire rope, synthetic fibre rope or natural fibre rope.

Fig.1

FIG. 2

FIG. 3

| | DOCUMENTS CONSIDERED TO BE RELEVANT | | EP 88309053.2 |

EUROPEAN SEARCH REPORT

European Patent Office

Application number

## DOCUMENTS CONSIDERED TO BE RELEVANT

EP 88309053.2

| Category | Citation of document with indication, where appropriate, of relevant passages | Relevant to claim | CLASSIFICATION OF THE APPLICATION (Int. Cl.4) |
|---|---|---|---|
| X | US - A - 750 886 (NOTTER) <br> * Fig. 1; page 1, lines 98,99 * | 1,4 | B 65 G 17/12 <br> B 65 G 25/10 // <br> B 65 G 23/42 |
| A | DE - C - 108 520 (BRADLEY) <br> * Last column, lines 2-12 * | 1,4 | |
| A | US - A - 1 279 579 (PERKINS) <br> * Fig. 1 * | 1 | |
| D,A | US - A - 4 184 584 (DEHLEN) <br> * Abstract * | 1 | |
| D,A | US - A - 4 493 413 (HARRELL) <br> * Fig. 1 * | 1 | TECHNICAL FIELDS SEARCHED (Int. Cl.4) <br><br> B 65 G |

The present search report has been drawn up for all claims

| Place of search | Date of completion of the search | Examiner |
|---|---|---|
| VIENNA | 02-12-1988 | BAUMGARTNER |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503 03 82